# EUROPÄISCHE PATENTANMELDUNG

(11) **EP 4 624 237 A1**
(43) Veröffentlichungstag der Anmeldung: **01.10.2025**
(21) Anmeldenummer: 25164687.3
(22) Anmeldetag: 19.03.2025
(51) Int. Cl.: B60L 53/67, B60L 53/62, B60L 53/10, B60L 53/31, H02J 7/00

(54) **FLEXIBLES DC-LADESYSTEM FÜR MEHRERE LADESÄULEN**

(30) Priorität: 27.03.2024 DE 102024108715
(71) Anmelder: Amperfied GmbH, 69190 Baden-Württemberg Walldorf (DE)
(72) Erfinder: Kleibaumhüter, Klaus-Dieter, 76669 Bad Schönborn (DE); Kahnwald, Sebastian, 68804 Altlußheim (DE); Twartz, Jennifer, 69207 Sandhausen (DE); Weilmann, Sebastian, 74912 Kirchardt (DE); Wurster, Christoph, 69190 Walldorf (DE)

(57) **Zusammenfassung**

Die Erfindung betrifft eine Ladevorrichtung zum elektrischen Laden mehrerer Elektrofahrzeuge (3) mit wenigstens einem Netzanschluss (1) und mit wenigstens einem Gleichrichter (2), welcher die Wechselspannung des Netzanschlusses (1) in eine Gleichspannung zur Versorgung von Ladepunkten (P1, P2, P3, P4, P5, P6, P7, P8) in Ladesäulen (S1, S2, S3, S4) umwandelt, wobei die Ladevorrichtung mehrere Ladepunkte (P1, P2, P3, P4, P5, P6, P7, P8) zum Laden mehrerer Elektrofahrzeuge (3) aufweist und jeder Ladepunkt (P1, P2, P3, P4, P5, P6, P7, P8) direkt oder indirekt über ein Versorgungskabel an den Gleichrichter (2) angeschlossen ist. Dabei ist vorgesehen, dass mehrere Ladepunkte (P1, P2, P3, P4, P5, P6, P7, P8) zum Laden von ein oder mehreren Elektrofahrzeugen (3) über Verbindungskabel (4) und Schalter (S) zusammenschaltbar sind.

## Beschreibung

Die Erfindung betrifft eine Ladevorrichtung zum elektrischen Laden mehrerer Elektrofahrzeuge mit wenigstens einem Netzanschluss und mit wenigstens einem Gleichrichter, welcher die Wechselspannung des Netzanschlusses in eine Gleichspannung zur Versorgung von Ladepunkten in Ladesäulen umwandelt, wobei die Ladevorrichtung mehrere Ladepunkte zum Laden mehrerer Elektrofahrzeuge aufweist.

Eine gattungsgemäße Ladevorrichtung ist aus der Offenlegungsschrift DE 10 2017 116 887 A1 bekannt. Dort wird eine Ladestation zum Laden mehrerer Elektrofahrzeuge beschrieben, welche eine Versorgungseinrichtung zum Anschluss an ein elektrisches Stromnetz zum Versorgen der Ladestation mit elektrischer Leistung sowie mehrere Ladeterminals zum Laden jeweils wenigstens eines Elektrofahrzeuges aufweist. Jedes Ladeterminal umfasst einen Versorgungeingang zum Beziehen elektrischer Leistung von der Versorgungseinrichtung und einen Ladeausgang mit einem oder mehreren Ladeanschlüssen zum Abgeben jeweils eines Ladestroms an ein angeschlossenes Fahrzeug. Zwischen dem Versorgungseingang und dem Ladeausgang ist ein Gleichstromsteller angeordnet, um aus der elektrischen Leistung der Versorgungseinrichtung jeweils einen Stromstellerstrom zu erzeugen oder alternativ wenigstens eines zwischen dem Versorgungseingang und dem Ladeausgang angeordnetes Stromstellerterminal zu nutzen, um einen außerhalb des Ladeterminals von einem Gleichstromsteller erzeugten Stromstellerstrom bereit zu stellen. Die Ladeterminals sind untereinander an Austauschanschlüssen über elektrische Austauschleitungen verbunden, um darüber Stromstellerströme untereinander auszutauschen. Die Ladestationen sind dabei über einen DC-Bus miteinander verbunden, welcher auf die maximale Gesamtleistung aller Terminals der Ladestation ausgelegt sein muss. Dies führt zu großen Kabelquerschnitten und zu einer entsprechend teuren Dimensionierung.

Es ist Aufgabe der vorliegenden Erfindung, eine Ladevorrichtung zur Verfügung zu stellen, welche möglichst flexibel auf unterschiedliche Leistungsanforderungen von Elektrofahrzeugen an einem Ladepunkt reagieren kann und gleichzeitig mit möglichst geringen Kabelquerschnitten auskommt.

Diese Aufgabe wird erfindungsgemäß durch Patentanspruch 1 gelöst. Vorteilhafte Ausgestaltungen der Erfindung ergeben sich aus den Unteransprüchen und den Zeichnungen.

Bei der erfindungsgemäßen Ladevorrichtung ist vorgesehen, dass die einzelnen Ladepunkte und/oder Ladesäulen von einem zentralen Gleichrichter jeweils direkt oder indirekt mit elektrischer Energie versorgt werden. Indirekt bedeutet, dass dem Gleichrichter noch ein meist potentialtrennender Gleichstromsteller nachgeordnet ist, welcher die Ausgangsspannung des Gleichrichters deutlich erhöhen kann und so die Ladepunkt mit höherer Spannung versorgen kann. Dabei werden die Ladepunkte auf eine häufig gebrauchte Mindestleistung hin dimensioniert und die entsprechenden Zuleitungen vom Gleichrichter zu den Ladepunkten und die Gleichstromkonverter in den Ladepunkten entsprechend dimensioniert. Erfindungsgemäß ist nun vorgesehen, dass mehrere Ladepunkte zum Laden von ein oder mehreren Elektrofahrzeugen über Verbindungskabel und Schalter zusammenschaltbar sind. Wenn die in einem Ladepunkt zur Verfügung stehende elektrische Leistung nicht ausreicht und bei benachbarten Ladepunkten entsprechende Leistung übrig ist, kann nun über ein Verbindungskabel und entsprechende Schalter ausgangsseitig an den Ladepunkten die Leistung an einem oder mehreren Ladepunkten entsprechend erhöht werden. Dabei sind ausgangsseitig an den Ladepunkten und/oder Ladesäulen entsprechende Schaltermatrizen vorgesehen, welche so verschaltet werden, dass die von den benachbarten Ladepunkten dort nicht benötigte Leistung zu dem gewünschten Ladepunkt umgeleitet werden kann. Diese Ladevorrichtung hat den großen Vorteil, dass sie ähnlich wie beim Stand der Technik flexibel reagieren kann, aber keine aufwändig dimensionierten Zuleitungen für den auf maximale Leistung aller Ladepunkte ausgelegten DC-Bus im Stand der Technik benötigt wird.

In einer ersten Ausgestaltung der vorliegenden Erfindung ist vorgesehen, dass wenigstens zwei Ladepunkte in einer Ladesäule angeordnet sind. Mit dieser Ausführungsform können in einer Ladesäule über wenigstens zwei Ladepunkte wenigstens zwei Elektrofahrzeuge geladen werden. Ist nur ein Elektrofahrzeug an der Ladesäule angeschlossen, so können die beiden Ladepunkte über Schalter verbunden und somit die doppelte Ladeleistung für das eine Elektrofahrzeug genutzt werden.

Vorteilhafterweise ist weiterhin vorgesehen, dass mehrere Ladesäulen über ein Verbindungskabel und Schalter zum Laden von ein oder mehreren Elektrofahrzeugen zusammenschaltbar sind. Durch das Zusammenschalten von mehreren Ladesäulen, insbesondere mit mehreren Ladepunkten, kann so die von einem zu ladenden Elektrofahrzeug benötigte Leistung nicht nur verdoppelt, sondern noch deutlich gesteigert werden, indem drei, vier oder mehr Ladepunkte miteinander verbunden sind. Dazu sind die Verbindungskabel zwischen den Ladesäulen so ausgelegt, dass die maximal zulässige Leistung an einem Ladepunkt über die Verbindungskabel geleitet werden kann.

Des Weiteren ist vorgesehen, dass die mehreren Ladepunkte oder mehreren Ladesäulen über einen zentralen Gleichrichter mit elektrischer Energie versorgt werden. In diesem Fall lassen sich Kosten sparen, indem ein zentraler Gleichrichter in der Ladevorrichtung vorgesehen ist, von dem aus zu jeder Ladesäule oder jedem Ladepunkt ein entsprechendes Versorgungskabel gelegt ist. Dieses Versorgungskabel muss dann nur auf die Leistung eines Ladepunktes oder einer Ladesäule ausgelegt sein. Weiterhin ist ein zentraler Gleichrichter kostengünstiger als mehrere dezentrale Gleichrichter in den Ladesäulen. Auch dies ist ein erheblicher Vorteil beim Einsatz eines zentralen Gleichrichters. Der zentrale Gleichrichter kann dabei aus mehreren Gleichrichtermodulen aufgebaut sein, welche entsprechend zusammengeschaltet die nötige Leistung bereitstellen.

In einer alternativen Ausführungsform ist es möglich, dass die mehreren Ladesäulen oder mehreren Ladepunkte über mehrere Gleichrichter mit elektrischer Energie versorgt werden. Wenn ein Gleichrichter nicht ausreicht, um die nötige Ladeleistung für alle Ladepunkte bereitzustellen, werden mehrere Gleichrichter für einen Netzanschluss parallelgeschaltet. Sollte auch der eine Netzanschluss nicht ausreichen, muss die elektrische Energie über mehrere Netzanschlüsse bezogen werden. In diesem Fall ist es sinnvoll, an jedem Netzanschluss einen entsprechenden Gleichrichter vorzusehen, so dass jeder Gleichrichter nur eine bestimmte Anzahl von Ladepunkten oder Ladesäulen mit elektrischer Energie versorgt. Trotzdem ist es über die Verbindungskabel und Schalter an und zwischen den Ladesäulen und Ladepunkten möglich, die elektrische Energie von benachbarten Ladepunkten und Ladesäulen für einen oder mehrere Ladepunkte zusammenzuschalten, auch wenn die Ladepunkte oder Ladesäulen von unterschiedlichen Gleichrichtern und auch unterschiedlichen Netzanschlüssen versorgt werden. Dies erhöht die Flexibilität und Leistungsfähigkeit einer erfindungsgemäßen Ladevorrichtung weiter.

Des Weiteren ist vorgesehen, dass die Ladepunkte in einer Ladesäule durch Schalter zum Laden von einem oder mehreren Elektrofahrzeugen zusammenschaltbar sind. Wenn eine Ladesäule zwei oder mehr Ladepunkte aufweist, so können diese über Schalter so zusammengeschaltet werden, dass die gesamte Leistung aller Ladepunkte in der Ladesäule einem Elektrofahrzeug zur Verfügung steht, wenn die anderen Ladepunkte in dieser Ladesäule ungenutzt sind.

Des Weiteren ist vorgesehen, dass die Ladevorrichtung wenigstens einen Steuerungsrechner aufweist, welcher in Abhängigkeit der belegten Ladepunkte die Schalter zum Verbinden von Ladepunkten und/oder Ladesäulen steuert. Dieser Steuerungsrechner kann zentral bevorzugt in der Nähe des zentralen Gleichrichters installiert sein, es ist aber auch möglich, dezentrale Rechner zu verwenden, indem z. B. in jeder Ladesäule ein Rechner untergebracht ist, wobei die Rechner über eine Datenbus-Verbindung miteinander kommunizieren. Der Steuerungsrechner oder die dezentralen Steuerungsrechner erfassen dabei die Belegung der jeweiligen Ladepunkte bzw. Ladesäulen und die an dem jeweiligen Ladepunkt vom jeweiligen Elektrofahrzeug angeforderte maximale Ladeleistung. In Abhängigkeit der belegten Ladepunkte können dann den angeschlossenen Elektrofahrzeugen die maximal möglichen Ladeleistungen zur Verfügung gestellt werden. Dies hat den großen Vorteil, dass bei einer Ladevorrichtung mit vielen Ladepunkten und wenigen angeschlossenen Elektrofahrzeugen die Elektrofahrzeuge mit der maximalen vom Elektrofahrzeug zulässigen Ladeleistung aufgeladen werden können, obwohl die einzelnen Ladepunkte nur einen Bruchteil dieser Ladeleistung zur Verfügung stellen können und entsprechend dimensioniert sind. Dies ist der große Vorteil der vorliegenden Erfindung mit der Verbindung über Kabel und der Ansteuerung der entsprechenden Schalter.

Die vorliegende Erfindung wird nachfolgend anhand mehrerer Figuren näher beschrieben und erläutert. Es zeigen:
- Figur 1: einen Übersichtsplan einer erfindungsgemäßen Ladevorrichtung mit einem zentralen Gleichrichter und vier Ladesäulen mit je zwei Ladepunkten,
- Figur 2: das Laden von Elektrofahrzeugen mit geringer Ladeleistung,
- Figur 3: das Laden eines Elektrofahrzeugs mit einer erhöhten Ladeleistung,
- Figur 4: das Laden eines Elektrofahrzeugs mit einer hohen Ladeleistung,
- Figur 5: das Laden eines Elektrofahrzeugs mit einer besonders hohen Ladeleistung,
- Figur 6: das Laden von zwei Elektrofahrzeugen mit einer erhöhten Ladeleistung und
- Figur 7: das Laden von zwei Elektrofahrzeugen an zwei Ladesäulen mit einer jeweils hohen Ladeleistung.

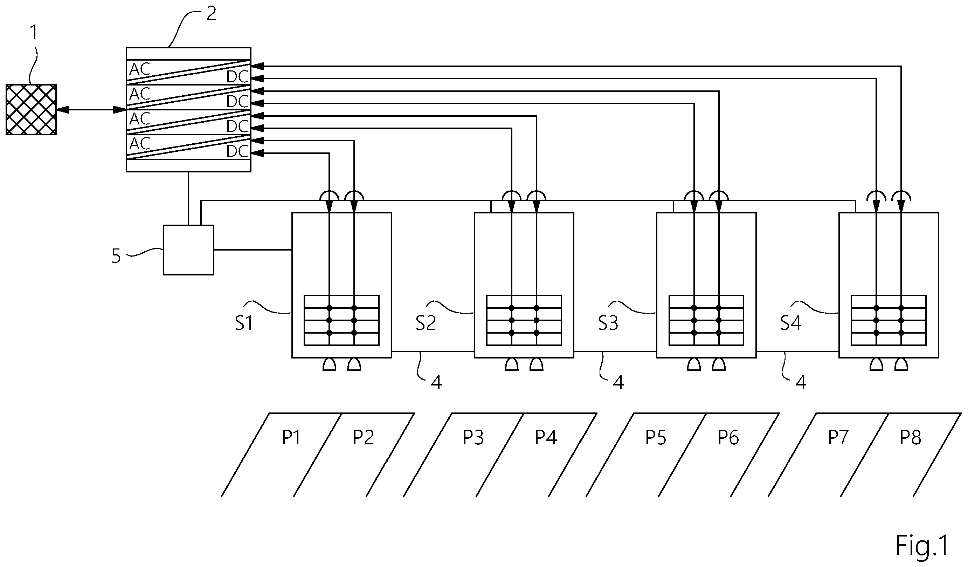

Figur 1 zeigt eine Übersicht über eine erfindungsgemäße Ladevorrichtung, welche an einen Drehstromnetzanschluss 1 angeschlossen ist. Aus dem vom Netzanschluss 1 gelieferten Drehstrom erzeugt ein zentraler Gleichrichter 2 eine Gleichspannung, welche von dem zentralen Gleichrichter 2 über jeweils eine Zuleitung direkt oder indirekt an einen der Ladepunkte P1, P2, P3, P4, P5, P6, P7, P8 verteilt wird. Indirekt bedeutet, dass zwischen Ladepunkt P1, P2, P3, P4, P5, P6, P7, P8 und Gleichrichter 2 noch meist ein hier nicht gezeigter potentialtrennender DC/DC -Wandler vorhanden ist, welcher die Potentialtrennung gewährleistet und zudem die Spannung meist deutlich erhöhen kann. Dabei kann jeder Gleichrichter 2 über einen nachgeordneten DC/DC Wandler verfügen.

Jeder dieser Ladepunkte P1, P2, P3, P4, P5, P6, P7, P8 kann dabei ein Elektrofahrzeug 3 laden. Jeweils zwei der Ladepunkte P1, P2, P3, P4, P5, P6, P7, P8 sind in einer Ladesäule S1, S2, S3, S4 zusammengefasst. Dies bedeutet, dass an jeder Ladesäule wenigstens zwei Elektrofahrzeuge 3 geladen werden können. Weiterhin verfügt die Ladevorrichtung über einen Steuerungsrechner 5, welcher mit dem zentralen Gleichrichter 2 und den Ladesäulen S1, S2, S3, S4 kommuniziert. In dem Steuerungsrechner 5 sind dabei jeweils die maximalen Leistungen der Ladepunkte P1, P2, P3, P4, P5, P6, P7, P8 und die maximalen Ausgangsleistungen des zentralen Gleichrichters 2 abgelegt. Weiterhin sind die Ladesäulen S1, S2, S3, S4 über Kabelverbindungen 4 miteinander verbunden, so dass die Ladeleistung benachbarter Ladesäulen zum Laden eines Elektrofahrzeugs 3 mit genutzt werden kann.

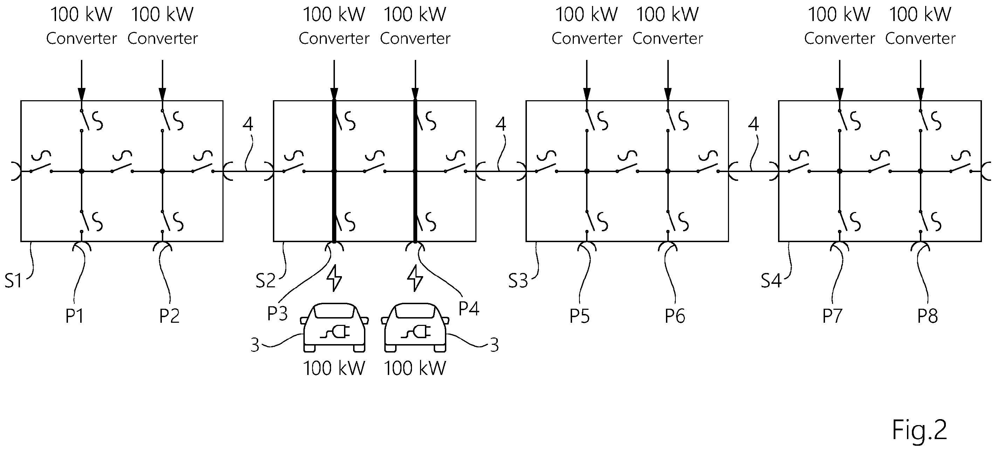

Dies ist in Figur 2 näher beschrieben. Hier ist zu erkennen, dass zwischen jeder der Ladesäulen S1, S2, S3, S4 eine Kabelverbindung 4 vorhanden ist, welche über Schalter S in den Ladesäulen zu- und abgeschaltet werden kann. Weiterhin ist es über die Schalter S in den Ladesäulen möglich, einzelne Ladepunkte P1, P2, P3, P4, P5, P6, P7, P8 in einer Ladesäule S1, S2, S3, S4 miteinander zu verbinden. In Figur 2 sind an der zweiten Ladesäule S2 zwei Elektrofahrzeuge 3 mit jeweils 100 KW maximaler Ladeleistung an dem Ladepunkten P3, P4 angeschlossen. Vom zentralen Gleichrichter 2 wird dabei zu jedem der Ladepunkte P3, P4 eine maximale Ladeleistung von 100 KW geliefert. Dies entspricht genau der jeweiligen maximalen Ladeleistung des Elektrofahrzeugs 3. Folglich können die beiden Elektrofahrzeuge 3 an der Ladesäule S2 durch die vom zentralen Gleichrichter 2 zur Verfügung gestellte maximale Leistung optimal geladen werden. Entsprechend sind die Schalter S zu den benachbarten Ladesäulen S1, S3 und zwischen den Ladepunkten P3, P4 geöffnet.

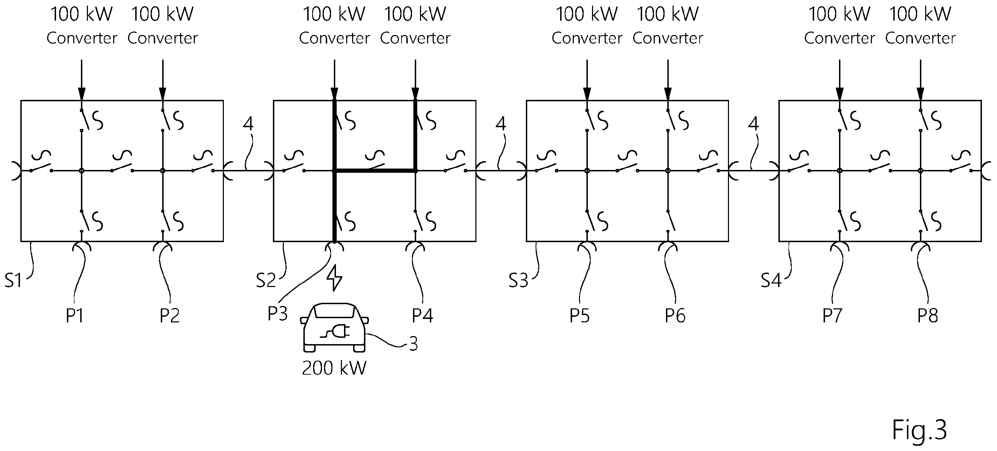

In Figur 3 ist an der zweiten Ladesäule S2 am Ladepunkt P3 nur ein Elektrofahrzeug 3 angeschlossen, welches über eine maximale Ladeleistung von 200 KW verfügt. Da jeder Ladepunkt P3, P4 nur eine maximale Ladeleistung von 100 KW zur Verfügung stellt, werden in diesem Fall die beiden Ladepunkte P3, P4 über den Schalter S miteinander verbunden, so dass das Elektrofahrzeug 3 mit zusammen 200 KW geladen werden kann und somit die maximale Ladeleistung des Elektrofahrzeugs 3 erreicht werden kann. Da der Ladepunkt P4 nicht belegt ist, kann der Steuerungsrechner 5 aufgrund des nicht belegten Ladepunkts P4 diesen über den Schalter S mit dem Ladepunkt P3 verschalten und somit die gewünschte maximale Ladeleistung von 200 KW zur Verfügung stellen.

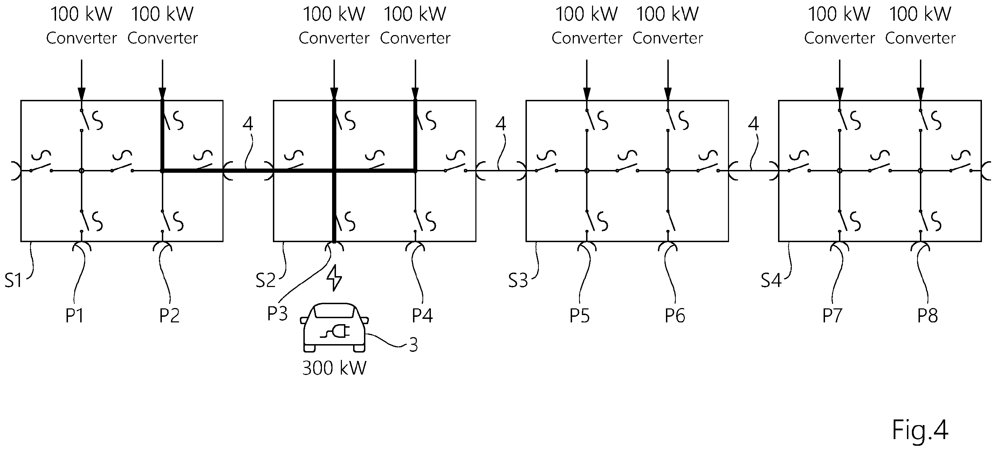

In Figur 4 ist ebenfalls nur ein Elektrofahrzeug 3 an der Ladesäule S2 angeschlossen, wobei dieses über eine maximale Ladeleistung von 300 KW verfügt. Diese maximale Ladeleistung kann von den beiden Ladepunkten P3, P4 in der Ladesäule S2 nicht zur Verfügung gestellt werden, weshalb über das Verbindungskabel 4 und den Schalter S zusätzlich der Ladepunkt P2 der ersten Ladesäule S1 dazugeschaltet wird. Insgesamt stehen so für das Elektrofahrzeug 3 drei Mal 100 KW Ladeleistung bereit und somit kann die maximale Gesamtladeleistung von 300 KW des Elektrofahrzeugs 3 genutzt werden.

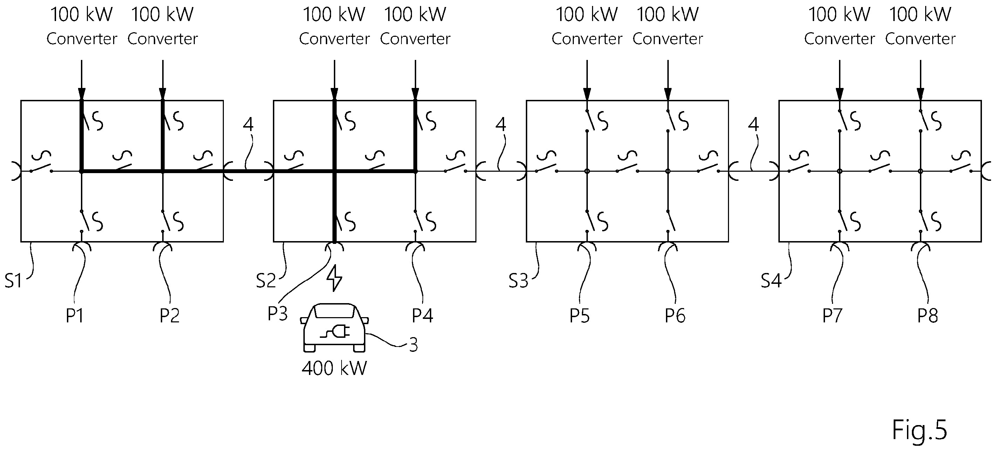

In Figur 5 verfügt das Elektrofahrzeug 3 an der Ladesäule S2 über eine maximale Ladeleistung von 400 KW, um diese zu erreichen werden sämtliche Ladepunkte P1, P2, P3, P4 über die Schalter S und das Verbindungskabel 4 der Ladesäulen S1, S2 zusammengeschaltet. Da die Ladepunkte P1, P2, P4 nicht belegt sind, kann deren Leistung somit komplett dem Ladepunkt P3 zugeführt werden und das Elektrofahrzeug 3 kann mit der maximalen Ladeleistung von 400 KW geladen werden.

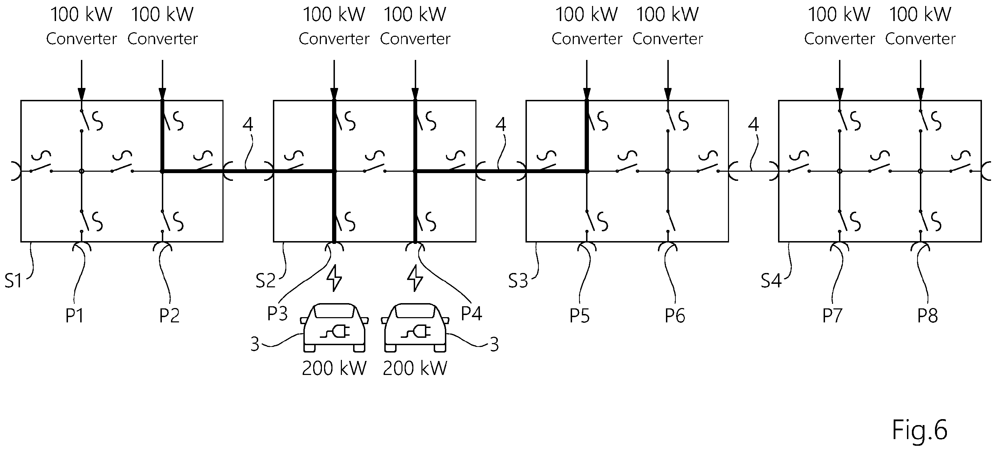

In Figur 6 werden nun zwei Elektrofahrzeuge 3 an den Ladepunkten P3, P4 der zweiten Ladesäule S2 geladen, wobei beide Elektrofahrzeuge 3 über eine maximale Ladeleistung von 200 KW verfügen. Um dies zu erreichen, wird der Ladepunkt P3 der zweite Säule S2 mit dem Ladepunkt P2 der ersten Säule S1 verbunden und der Ladepunkt P4 der zweiten Säule S2 mit dem Ladepunkt P5 der dritten Säule S3. Auf diese Art und Weise können an einer Säule S2 gleichzeitig zwei Elektrofahrzeuge 3 mit einer maximalen Ladeleistung von jeweils 200 KW mit der vollen Ladeleistung geladen werden.

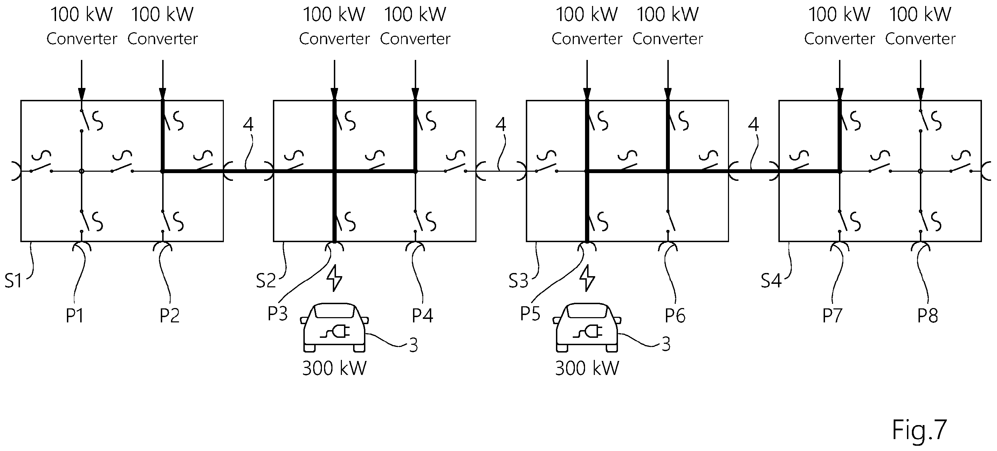

Ein weiteres Szenario ist in Figur 7 abgebildet, dort stehen an den Ladesäulen S2, S3 jeweils ein Elektrofahrzeug 3 mit einer maximalen Ladeleistung von 300 KW. Damit diese maximale Ladeleistung jeweils erreicht wird, werden die beiden Ladepunkte P3, P4 der zweiten Ladesäule S2 mit dem Ladepunkt P2 der ersten Ladesäule S1 verbunden und die Ladepunkte P5, P6 der dritten Ladesäule S3 mit dem Ladepunkt P7 der vierten Ladesäule S4. Somit können auch die beiden leistungshungrigen Elektrofahrzeuge 3 mit einer maximalen Ladeleistung von 300 KW betrieben werden.

Der große Vorteil der vorliegenden Erfindung liegt darin, dass die Zuführungen zu den Ladesäulen S1, S2, S3, S4 jeweils nur auf einen Ladepunkt ausgelegt sein müssen und keine entsprechend dicken und teuren Kabel verlegt werden müssen. Wenn nicht alle Ladepunkte P1, P2, P3, P4, P5, P6, P7, P8 belegt sind, können diese zusammengeschaltet werden und einem oder mehreren Elektrofahrzeugen 3 zur Verfügung gestellt werden, so dass die 100 KW-Ladeleistungsbegrenzung pro Ladepunkt problemlos überschritten werden kann.

### Bezugszeichenliste

- 1: Drehstromnetzanschluss
- 2: zentraler Gleichrichter
- 3: Elektrofahrzeug
- 4: Verbindungskabel
- 5: Steuerungsrechner
- S: Schalter
- S1, S2, S3, S4: Ladesäule
- P1, P2, P3, P4, P5, P6, P7, P8: Ladepunkte für Elektrofahrzeuge

## Patentansprüche

1. Ladevorrichtung zum elektrischen Laden mehrerer Elektrofahrzeuge (3) mit wenigstens einem Netzanschluss (1) und mit wenigstens einem Gleichrichter (2), welcher die Wechselspannung des Netzanschlusses (1) in eine Gleichspannung zur Versorgung von Ladepunkten (P1, P2, P3, P4, P5, P6, P7, P8) in Ladesäulen (S1, S2, S3, S4) umwandelt, wobei die Ladevorrichtung mehrere Ladepunkte (P1, P2, P3, P4, P5, P6, P7, P8) zum Laden mehrerer Elektrofahrzeuge (3) aufweist und jeder Ladepunkt (P1, P2, P3, P4, P5, P6, P7, P8) direkt oder indirekt über ein Versorgungskabel an den Gleichrichter (2) angeschlossen ist,
**dadurch gekennzeichnet,**
**dass** mehrere Ladepunkte (P1, P2, P3, P4, P5, P6, P7, P8) zum Laden von ein oder mehreren Elektrofahrzeugen (3) über Verbindungskabel (4) und Schalter (S) zusammenschaltbar sind.

2. Ladevorrichtung nach Patentanspruch 1,
**dadurch gekennzeichnet,**
**dass** wenigstens zwei Ladepunkte (P1, P2, P3, P4, P5, P6, P7, P8) in einer Ladesäule (S1, S2, S3, S4) angeordnet sind.

3. Ladevorrichtung nach Anspruch 2,
**dadurch gekennzeichnet,**
**dass** mehrere Ladesäulen (S1, S2, S3, S4) über ein Verbindungskabel (4) und Schalter (S) zum Laden von einem oder mehreren Elektrofahrzeugen (3) zusammenschaltbar sind.

4. Ladevorrichtung nach einem der vorhergehenden Ansprüche,
**dadurch gekennzeichnet,**
**dass** die mehreren Ladepunkte (P1, P2, P3, P4, P5, P6, P7, P8) oder mehreren Ladesäulen (S1, S2, S3, S4) über einen zentralen Gleichrichter (2) mit elektrischer Energie versorgt werden.

5. Ladevorrichtung nach einem der Ansprüche 1 bis 3,
**dadurch gekennzeichnet,**
**dass** die mehreren Ladesäulen (S1, S2, S3, S4) oder mehreren Ladepunkte (P1, P2, P3, P4, P5, P6, P7, P8) über mehrere Gleichrichter (2) mit elektrischer Energie versorgt werden.

6. Ladevorrichtung nach einem der vorhergehenden Ansprüche,
**dadurch gekennzeichnet,**
**dass** die Ladepunkte (P1, P2, P3, P4, P5, P6, P7, P8) in einer Ladesäule (S1, S2, S3, S4) durch Schalter (S) zum Laden von einem oder mehreren Elektrofahrzeugen (3) zusammenschaltbar sind.

7. Ladevorrichtung nach einem der vorhergehenden Ansprüche,
**dadurch gekennzeichnet,**
**dass** die Ladevorrichtung wenigstens einen Steuerungsrechner (5) aufweist, welcher in Abhängigkeit der belegten Ladepunkte (P1, P2, P3, P4, P5, P6, P7, P8) die Schalter (S) zum Verbinden von Ladepunkten (P1, P2, P3, P4, P5, P6, P7, P8) und/oder Ladesäulen (S1, S2, S3, S4) steuert.

8. Ladevorrichtung nach Patentanspruch 7,
**dadurch gekennzeichnet,**
**dass** der Steuerungsrechner (5) die maximale Ladeleistung der an den Ladepunkten (P1, P2, P3, P4, P5, P6, P7, P8) angedockten Elektrofahrzeuge (3) erfasst und in Abhängigkeit der von den Gleichrichtern (2) bereitgestellten elektrischen Energie die maximal mögliche Ladeleistung durch Ansteuerung der Schalter (S) zwischen den Ladepunkten (P1, P2, P3, P4, P5, P6, P7, P8) zur Verfügung stellt.
